# EUROPEAN PATENT APPLICATION

(11) **EP 4 742 525 A1**
(43) Date of publication of application: **13.05.2026**
(21) Application number: 24211492.4
(22) Date of filing: 07.11.2024
(51) Int. Cl.: H02M 3/335, H02M 1/00

(54) **AUXILIARY SUPPLY FOR MEDIUM-VOLTAGE DC/DC CONVERTERS UTILIZING AN AUXILIARY TRANSFORMER INTEGRATED IN THE CONVERTER SYSTEM**

(71) Applicant: ABB SCHWEIZ AG, 5400 Baden (CH)
(72) Inventor: CHRISTEN, Daniel, 8610 Uster (CH); ROTHMUND, Daniel, 5243 Mülligen (CH); STOJADINOVIC, Milos, 5400 Baden (CH); CANALES, Francisco, 5405 Baden-Dättwil (CH); PETTERSSON, Sami, 8953 Dietikon (CH)
(74) Representative: Zimmermann & Partner Patentanwälte mbB

(57) **Abstract**

The present disclosure relates to a converter (100) for transferring power from a medium voltage, MV, side to a low voltage, LV, side, comprising: a MV unit (20) at the MV side comprising a DC/AC cell (210) having a MV AC terminal (212), the DC/AC cell configured for generating an MV AC voltage (211) at the MV AC terminal (212) from a MV DC voltage; a LV unit (30) at the LV side comprising an AC/DC cell (310) having a LV AC terminal (312), the AC/DC cell configured for generating a LV DC voltage from a LV AC voltage (311) at the LV AC terminal; a first transformer cell (40) comprising a first transformer (401), the first transformer cell being electrically connected to the MV AC terminal (212) and the LV AC terminal (312), the first transformer cell configured to generate the LV AC voltage (311) at the LV AC terminal from the MV AC voltage (211) at the MV AC terminal; a second transformer cell (60) comprising a first resonant tank circuitry and a second transformer (603), the second transformer cell being electrically connected to the MV AC terminal (212), the second transformer cell configured to generate an auxiliary AC supply voltage (611) at one or more supply terminals (612, 621, 631) of the second transformer cell from the MV AC voltage (211) at the MV AC terminal (212), an auxiliary power circuitry (90) coupled to the one or more supply terminals (612, 621, 631) of the second transformer cell (60), the auxiliary power circuitry configured to provide auxiliary power (91) to one or more components of the MV unit based at least in part on the auxiliary AC supply voltage (611) at the one or more supply terminals (612). Furthermore, the present disclosure relates to an according method for operating a converter.

## Description

The present disclosure relates to a converter for transferring power from a medium voltage side to a low voltage side, and a method for operating a converter for transferring power from a medium voltage side to a low voltage side.

### Technical background

Isolated DC/DC converters that employ medium-frequency transformers (MFTs) may require auxiliary power on both sides of the MFT's insulation barrier to operate control circuitry, power electronic switches, and e.g. fans for cooling. For example, in DC/DC converters that are part of a Solid-State Transformer (SST), the insulation requirements between the medium-voltage (MV) side and the low-voltage (LV) side of the SST can be derived from the MV-side grid voltage via standards such as the IEC 62477-2 and may require Basic Insulation Levels (BIL). For instance, the BIL of a 15kV grid voltage corresponds to the range of 95kV. To fulfill this standard, any possible path between the MV-side and the LV-side must guarantee the required insulation voltage or BIL.

According to the conventional technology, auxiliary power may be provided to the MV-side auxiliary circuits directly from the MV-side DC-link which circumvents the BIL requirements. On the other hand, it may require a relatively complex and expensive auxiliary converter given the fact that the MV-side DC-link voltages can be in the range of 2 kV to 10 kV or even higher.

A further option may be to employ an external isolated DC/DC converter that is supplied from the LV-side. Since it feeds power from the LV to the MV side, it may be required to provide the same insulation voltage as the MFT which can make it large and expensive although it might only be rated for a comparably low power.

Thus, there is a need for an improved converter, particularly a converter suitable for use with medium voltages.

### Summary of the invention

A first aspect relates to a converter for transferring power from a medium voltage, MV, side to a low voltage, LV, side.

The converter may comprise: a MV unit at the MV side comprising a DC/AC cell having a MV AC terminal, the DC/AC cell configured for generating an MV AC voltage at the MV AC terminal from a MV DC voltage; a LV unit at the LV side comprising an AC/DC cell having a LV AC terminal, the AC/DC cell configured for generating a LV DC voltage from a LV AC voltage at the LV AC terminal.

The converter may further comprise a first transformer cell comprising a first transformer, the first transformer cell being electrically connected to the MV AC terminal and the LV AC terminal, the first transformer cell configured to generate the LV AC voltage at the LV AC terminal from the MV AC voltage at the MV AC terminal.

The converter may further comprise a second transformer cell comprising a first resonant tank circuitry and a second transformer, the second transformer cell being electrically connected to the MV AC terminal, the second transformer cell configured to generate an auxiliary AC supply voltage at one or more supply terminals of the second transformer cell from the MV AC voltage at the MV AC terminal.

The converter may further comprise an auxiliary power circuitry coupled to the one or more supply terminals of the second transformer cell, the auxiliary power circuitry configured to provide auxiliary power to one or more components of the MV unit based at least in part on the auxiliary AC supply voltage at the one or more supply terminals.

The DC/AC cell at the MV side may comprise an electrical circuit which may transfer the MV DC voltage to an MV AC voltage. For example, the DC/AC cell may comprise one or more electrical components which cause an according DC to AC voltage transfer. For example, the DC/AC cell at the MV side may comprise an according DC/AC inverter.

The MV AC terminal of the DC/AC cell may be regarded as an output terminal of the DC/AC cell where the MV AC voltage can be provided. The DC/AC cell at the MV side may further comprise a MV DC terminal which may function as an input terminal of the DC/AC cell where the MV DC voltage can be provided.

The AC/DC cell at the LV side may comprise an electrical circuit which may transfer the LV AC voltage to an LV DC voltage. For example, the AC/DC cell may comprise one or more electrical components which cause an according AC to DC voltage transfer. For example, the AC/DC cell at the LV side may comprise an according AC/DC inverter.

The LV AC terminal of the AC/DC cell may be regarded as an input terminal of the AC/DC cell where the LV AC voltage can be provided. The AC/DC cell at the LV side may further comprise a LV DC terminal which may function as an output terminal of the AC/DC cell where the LV DC voltage can be provided.

In an example, the first transformer cell input terminal may be connected to the MV AC terminal of the DC/AC cell of the MV unit and the first transfer output terminal may be connected to the LV AC terminal of the AC/DC cell of the LV unit.

A medium voltage, MV, as used herein, may refer to (absolute) voltages above 1 kV, such as a voltage between 1 kV - 52 kV, or particularly 1 kV - 33 kV. For example, a medium voltage may be a voltage received, and optionally rectified, from a medium voltage grid, such as a 10 kV grid, a 15 kV grid, a 20 kV grid, a 25 kV grid, a 30 kV grid, or even a 50 kV grid.

A low voltage, LV, as used herein, may refer to an (absolute) voltage of approximately at least 200 V, such as a voltage between 200 V - 1,5 kV in particular a voltage between 200 V - 1 kV.

As described, the first transformer cell may comprise the first transformer. In some examples, the first transformer cell may only comprise the first transformer. For example, the first transformer cell may consist of the first transformer. In such a case the first transformer cell can be regarded as the first transformer. In other examples according to the present disclosure, the first transformer cell may comprise the first transformer and one or more further electrical components (e.g., passive and/or active electrical components). For example, the first transformer cell may comprise an electrical circuit comprising the first transformer and one or more further electrical components that are part of the electrical circuit (e.g., one or more resistors, capacitors, inductances and/or switches).

The first transformer cell may comprise a first transformer cell input terminal and a first transformer cell output terminal. The herein described MV AC voltage may be provided at the first transformer cell input terminal. The first transformer cell may be configured to transfer the MV AC voltage at the first transformer cell input terminal to the herein described LV AC voltage at the first transformer cell output terminal.

For example, to provide the MV AC voltage at the first transformer cell, the MV AC terminal of the DC/AC cell of the MV unit may be connected to the first transformer cell input terminal. The LV AC terminal of the AC/DC cell of the LV unit may be connected to the first transformer cell output terminal such that the LV AC voltage can be provided at the AC/DC cell of the LV unit.

To transfer the MV AC voltage to the LV AC voltage the first transformer may comprise an according winding configuration for a primary winding at a primary side and secondary winding at a secondary side. For example, the secondary side may be considered as being part of the MV side, wherein the primary side of the first transformer may be considered as being part of the LV side. The winding configuration of the first transformer may ensure that an input MV AC voltage at the MV side can be reduced onto a lower LV AC voltage at the LV side. The first transformer may comprise a medium-frequency transformer, MFT, that can enable the herein described power path from the MV side to the LV side.

In general, when describing in the present disclosure that a second voltage is generated from a first voltage by an electrical entity this may include that this voltage difference is generated from an input terminal of the electrical entity to an output terminal of the electrical entity.

The power path from the MV unit at the MV side to the LV unit at the MV side may be considered the main power path of the herein described converter.

In an example, the first transformer cell may comprise a first transformer cell resonant tank circuitry and the first transformer. The first transformer cell resonant tank circuitry may comprise an LC-circuit configuration comprising at least one inductor and at least one capacitor. The at least one inductor of the LC-circuit configuration of the first transformer cell may comprise a leakage inductance of the first transformer and/or a separate inductor connected to the first transformer. The at least one capacitor of the LC-circuit configuration of the first transformer cell may comprise a separate capacitor connected to the first transformer. The configuration of the first transformer cell resonant circuitry may be adapted such that a main power path resonant frequency can be provided, particularly for the power path from the MV side to the LV side. The main power path resonant frequency may be configured based on the power requirements (e.g., based on the expected or set voltages at the MV side and/or loads at the LV side, or other relevant parameters). For example, the main power path resonant frequency may be set via the inductance of the at least one inductor of the LC-circuit configuration of the first transformer cell resonant tank circuitry and via the at least one capacitance of the capacitor of the LC-circuit configuration of the first transformer cell resonant tank circuitry.

In an example, the resonant frequency of the main power path, particularly the resonant frequency of the first transformer cell, could be selected close to the switching frequency of the MV AC voltage. In this manner the voltage transfer from the MV side to the LV side may be independent of the load.

In an example, a main power path resonant frequency may be defined by a main power transfer function. An output of the main power transfer function may be the LV AC voltage at the LV AC terminal, and an input of the main power transfer function may be the MV AC voltage at the MV AC terminal. For example, the main power transfer function may be given by the ratio of LV AC voltage divided by the MV AC voltage which can depend on the frequency of the MV AC voltage. The first transformer cell may be configured to provide a galvanic isolation to ensure a defined electrical insulation between the MV side and the LV side of the converter. For example, the first transformer cell may be configured to provide a galvanic isolation for the main power path, electrically insulating the MV side from the LV side up to a defined level. Particularly, the galvanic isolation may be provided by the first transformer of the first transformer cell, for example, by providing an according first transformer configuration suitable to provide electrical isolation up to a defined level (e.g., by providing an according dielectric barrier, electrical shielding, or other isolation enhancing provisions at the first transformer).

The transfer of power along the main power path from the MV side to the LV side may require actively operating one or more electrical components of the MV unit. For example, the DC/AC cell of the MV unit may comprise one or more power electronics switches that have to be actively controlled which may require additional power. Furthermore, to operate the MV unit other power-requiring operation may need to be performed. For example, a control circuitry (e.g., an electrical control circuit or electronic controller comprising one or more processors) may need to be operated for controlling the MV unit, also fans for cooling components of the MV may need to be operated. Hence, auxiliary power may be needed at the MV side to ensure that the main power path can be provided from the MV side to the LV side.

The present disclosure relates to providing an auxiliary power to the MV unit while ensuring that according electrical isolation requirements can be met. This may be provided by the herein described second transformer cell and the auxiliary power circuitry.

As described herein, the converter may comprise the second transformer cell comprising a first resonant tank circuitry and a second transformer. The second transformer cell may be electrically connected to the MV AC terminal of the DC/AC cell of the MV unit.

The second transformer cell may comprise a second transformer cell input terminal with the second transformer cell input terminal being connected to the MV AC terminal of the DC/AC cell of the MV. Hence, the herein described MV AC voltage may be provided at the second transformer cell input terminal. The second transformer cell may be configured to transfer the MV AC voltage at the second transformer cell input terminal to an auxiliary AC supply voltage at one or more supply terminals of the second transformer cell. The one or more supply terminals of the second transformer cell may also be regarded as respective output terminals of the second transformer cell.

Particularly, the second transformer of the second transformer cell may be configured to adapt a first AC voltage at a primary winding at a primary side into a second AC voltage at least one secondary winding at a secondary side of the second transformer within the second transformer cell. Since a transformer can ensure a galvanic insulation between the primary and secondary side voltages a galvanic isolation can be provided by the secondary transformer cell. AC voltage may be regarded as galvanically insulated from the first AC voltage.

As described herein, the auxiliary power circuitry may be coupled to the one or more supply terminals of the second transformer cell. In the converter the auxiliary AC supply voltage generated by the second transformer cell may be provided as an input to the auxiliary power circuitry via the one or more supply terminals. The auxiliary power circuitry may comprise one or more electrical components (e.g., active and/or passive electrical components) which may further shape the auxiliary AC supply voltage in a defined manner to provide an auxiliary power which may be used by one or more components of the MV unit. For example, the auxiliary power circuitry may comprise one or more auxiliary power circuitry output terminals where a respective auxiliary power may be provided. The auxiliary power may be distributed to one or more electrical components of the MV unit by according power transmission connections. For example, the auxiliary power outputted by the auxiliary power circuitry may be coupled to power electronics of the MV unit, a control circuitry or controller configured for controlling the MV unit, and/or a cooling component of the MV unit, particularly a fan.

According to the present disclosure, the second transformer cell can enable providing an auxiliary power path in the converter wherein the auxiliary power path is on the MV side of the converter. Notably, the start of the auxiliary power path can be considered the MV AC voltage at the MV AC terminal of the DC/AC cell of the MV unit. The auxiliary power path then goes through the second transformer cell and the auxiliary power circuitry. From the auxiliary power circuitry, the auxiliary power path goes to one or more electrical components of the MV unit. The one or more electrical components receiving the auxiliary power could be considered a respective load of the auxiliary power path. Hence, the auxiliary power path starts and ends at the MV side of the converter. This may be beneficial, since the requirements for electrical isolation between the MV side and the LV side may not be necessary for the auxiliary power path and its components. For example, different isolation requirements may be defined with respect to the MV side than with respect to a power path from the MV side to the LV side. Accordingly, a lesser isolation level may be needed for the auxiliary path than for the main power path. This may reduce the size, cost and/or complexity of the components of the auxiliary power path with respect to isolation requirements.

For example, the isolation requirements for the second transformer may be reduced compared to the first transformer. This may enable to use a cheaper, smaller and/or less insulated transformer as the first transformer while providing a reliable auxiliary power to the MV unit.

In an example, the first resonant tank circuitry of the second transformer cell may comprise at least one of the following: a leakage inductance of the second transformer, a separate inductance (e.g., a separate inductor) electrically coupled to the second transformer, a separate capacitor electrically coupled to the second transformer, a separate LC-circuit configuration electrically coupled to the second transformer. The first resonant tank circuitry of the second transformer cell may comprise an LC-circuit configuration comprising at least one inductance and at least one capacitor.

The at least one inductance of the LC-circuit configuration of the first resonant tank circuitry may comprise a leakage inductance of the second transformer and/or a separate inductor connected to the second transformer. The at least one capacitor of the LC-circuit configuration of the first resonant tank circuitry may comprise a separate capacitor connected to the second transformer. For example, a separate inductance may not always be necessary for the LC-circuit configuration of the first resonant tank. Instead the leakage inductance of the second transformer cell may be used as an inductance in the LC-circuit configuration in combination with a separate capacitor. This may reduce the need for further electrical components for the converter. In other examples, a separate inductor may be used in combination with a separate capacitor. This may enable a further degree of freedom to shape the LC circuit configuration of the first resonant tank circuitry. In another example, the leakage inductance and a separate inductor and a separate capacitor may be used to provide the LC-circuit configuration of the first resonant tank circuitry. According to the present disclosure the first resonant tank circuitry of the second transformer cell may comprise an LC-circuit configuration comprising at least one separate inductor and/or at least one separate capacitor coupled to the second transformer.

In an example, the second transformer may be part of the first resonant tank circuitry of the second transformer cell (e.g., the second transformer may be integrated into the LC-circuit configuration of the first resonant tank circuitry as a component of the LC-circuit configuration, e.g., the resonance of the first resonant tank circuitry may depend on electrical parameters of the second transformer).

The configuration of the first resonant circuitry may be adapted such that one or more auxiliary power path resonant frequencies can be provided (as described herein). The one or more auxiliary power path resonant frequencies may be configured based on the power requirements (e.g., based on the expected loads that are coupled to the auxiliary power circuitry). For example, an auxiliary power path resonant frequency may be set via the inductance of the at least one inductor of the LC-circuit configuration of the first resonant tank circuitry of the second transformer cell and via the at least one capacitance of the capacitor of the LC-circuit configuration of the first resonant tank circuitry of the second transformer cell.

In an example, an auxiliary power path resonant frequency may be defined by an auxiliary power transfer function. An output of the auxiliary power transfer function may be an auxiliary AC supply voltage at a supply terminal of the second transformer cell, and an input of the auxiliary power transfer function may be the MV AC voltage at the MV AC terminal (which is coupled to the primary side of the second transformer cell). For example, the auxiliary power transfer function may be given by the ratio of an auxiliary AC supply voltage at a supply terminal divided by the MV AC voltage at the MV AC terminal which can depend on the frequency of the MV AC voltage.

A resonant frequency, may comprise a frequency (or frequency range) at which a (voltage) transfer function reaches a maximum. In an example, the resonant frequency may be a frequency at which a power gain may reach unity. To illustrate an example, an auxiliary power path resonant frequency may be at a frequency value where the auxiliary power transfer function has unity power gain.

The configuration of the first resonant tank circuitry may be adapted such that the one or more auxiliary power path resonant frequencies are based on a fundamental frequency of the MV AC voltage at the MV AC terminal. For example, the one or more auxiliary power path frequencies may have a mathematical relation to the fundamental frequency of the MV AC voltage at the MV AC terminal.

The fundamental frequency of the MV AC voltage at the MV AC terminal may be the (fundamental) frequency of the MV AC voltage wave (e.g., a sine or cosine wave, or rectangular wave) at the MV AC terminal. The frequency of the MV AC voltage may also be considered as the switching frequency of the MV AC voltage (fundamental frequency defined by the switching period).

In an example, the second transformer cell may be configured to provide an auxiliary resonant frequency such that at a predetermined load, particularly a maximum rated load, (of the second transformer cell) a voltage gain provided by the second transformer cell deviates from a unity voltage gain by no more than 20%, preferably 10 %, more preferably 5 %, more preferably 2 %. Furthermore, the second transformer cell may be configured to provide the auxiliary resonant frequency based on the predetermined load (e.g., an expected load or maximum rated load) and the (expected) switching frequency of the MV AC voltage. The voltage gain may be determined by a transfer function with the ratio of an auxiliary AC supply voltage at a supply terminal of the second transformer cell with respect to the MV AC voltage at the MV AC terminal. The configuration of the second transformer cell may enable that the voltage gain of the second transformer cell does not reach comparatively high deviations from the unity gain (which may reduce power losses and/or other parasitic effects at least in part).

For example, depending on the switching frequency of the MV AC voltage and the applied load to the second transformer cell a different voltage gain may be provided by the second transformer cell. The second transformer cell may be configured such that in view of the resonant frequency of the second transformer cell the voltage gain stays within the herein described range for a particular predetermined load.

In other words, the resonant frequency may be chosen in view of the switching frequency of the MV AC voltage and in view of the (e.g., expected) predetermined load to provide the voltage gain in a particular range (as described herein).

In an example, the second transformer cell, particularly the first resonant tank circuitry, may be configured to provide an auxiliary resonant frequency which deviates from a fundamental frequency of the MV AC voltage at the MV AC terminal, by no more than 10 %, preferably 5 %, more preferably 2 %. In an example, the auxiliary resonant frequency may be higher than the fundamental frequency of the MV AC voltage by no more than 10 %, preferably 5 %, more preferably 2 % of the fundamental frequency of the MV AC voltage.

The resonant frequency deviation in an auxiliary power path with respect to the fundamental frequency of the MV AC voltage at the MV AC terminal may be kept small in a defined manner. This may be beneficial as power losses or other electrical disturbances between the main power path and an auxiliary power path may be reduced at least in part.

For example, a fundamental frequency f_{AC,MAIN} may be set for the MV AC voltage at the MV AC terminal. For example, it may be predetermined that the MV unit is configured to provide a MV AC voltage with the fundamental frequency f_{AC,MAIN}. An auxiliary power path resonant frequency f_{R,AUX} may be set for an auxiliary power path (as described herein) wherein the auxiliary power path resonant frequency f_{R,AUX} may be defined by a transfer function with the ratio of an auxiliary AC supply voltage at a supply terminal of the second transformer cell with respect to the MV AC voltage at the MV AC terminal. In such an example, f_{R,AUX} may deviate from f_{AC,MAIN} by no more than 10 %, preferably 5 %, more preferably 2 %. For example, f_{R,AUX} may be higher than F_{AC,MAIN} by no more than 10 %, preferably 5 %, more preferably 2 % of F_{AC,MAIN}.

As mentioned herein, the main power path resonant frequency may be selected close to the fundamental frequency (also considered a switching frequency) of the MV AC voltage, as well. Accordingly, in an example, a resonant frequency of the main power path and a resonant frequency of an auxiliary power path may thus be close to each other. In an example, the second transformer cell, particularly the first resonant tank circuitry, may be configured to provide an auxiliary resonant frequency which deviates from a resonant frequency of a main power path (particularly a resonant frequency of the first transformer cell) by no more than 10 %, preferably 5 %, more preferably 2 %.

For example, a main power path resonant frequency f_{R,MAIN} may be set for the main power path (as described herein). The main power resonant frequency f_{MAIN} may be defined by a transfer function with the ratio of LV AC voltage at the LV AC terminal with respect to the MV AC voltage at the MV AC terminal. An auxiliary power path resonant frequency f_{R,AUX} may be set for an auxiliary power path (as described herein) wherein the auxiliary power path resonant frequency f_{R,AUX} may be defined by a transfer function with the ratio of an auxiliary AC supply voltage at a supply terminal of the second transformer cell with respect to the MV AC voltage at the MV AC terminal. In such an example, f_{R,AUX} may deviate from f_{R,MAIN} by no more than 10 %, preferably 5 %, more preferably 2 %.

The second transformer cell may further comprise other circuitry, e.g., one or more resistors or other passive or active electrical elements, which may not necessarily be considered to be part of the first resonant tank circuitry. For example, resistors or capacitances may be placed in the electrical circuit of the second transformer cell for various reasons (e.g., for current limitation or frequency filter functionalities).

In general, in the present disclosure, coupling of a first entity to a second entity may comprise that one or more electrical components can be present between the first entity and the second entity as long as an electrical power distribution can be provided between the first and second entity. For example, with the auxiliary power circuitry being coupled to one or more supply terminals of the second transformer cell one or more active or passive electrical components may be positioned between the respective one or more supply terminals and respective input terminals of the auxiliary power circuitry.

In an example, in the present disclosure, an electrical connection of a first entity and a second entity may comprise that one or more electrical components can be present between the first entity and the second entity as long as an electrical power distribution can be provided between the first and second entity. For example, the electrical connection between MV AC terminal and second transformer cell may also be achieved via one or more electrical components (e.g., a resistive element or other electrical component) being positioned between the MV AC terminal and the input terminal of the second transformer cell.

In another example, an electrical connection of a first entity and a second entity may comprise that the first entity is directly connected to the second entity.

In an example, the second transformer cell may be connected in parallel to the first transformer cell, particularly the second transformer of the second transformer cell may be connected in parallel to the first transformer of the first transformer cell.

In an example, a primary winding of the second transformer may be connected in parallel to a primary winding of the first transformer. For example, the primary winding of the second transformer may be connected in parallel to the MV AC terminal and the primary winding of the first transformer may be connected in parallel to the MV AC terminal, such that the primary windings of the first and second transformer are connected in parallel.

In an example, according to the present disclosure, if a first electrical entity is connected in parallel to a second electrical entity this may comprise that one or more other first components may be connected in series to the first electrical entity and/or that one or more second components may be connected in series to the second entity. The first electrical entity and the one or more other first components can form a first electrical unit and/or the second electrical entity and the one or more other second components can form a second electrical unit with the first electrical unit being parallel to the second electrical unit. In a further example, if a first electrical entity is connected in parallel to a second electrical entity this may comprise that one or more other components may be connected in parallel to the first electrical entity and that the first electrical entity and the one or more other components are forming an electrical unit with the electrical unit being parallel to the second electrical entity.

For example, an inductor or resistor may be connected in series to the primary winding of the second transformer cell between the MV AC terminal and the input terminal of the second transformer cell (wherein the primary winding may be considered a primary inductance). According to the present disclosure the primary winding may be considered to be connected parallel to the primary winding of the first transformer cell as the primary winding of the second transformer cell and the mentioned inductor or resistor form an electrical unit with the electrical unit being connected in parallel to the primary winding of the first transformer cell.

The parallel connection of the second transformer cell to the first transformer cell may ensure that the second transformer cell can be considered to be decoupled from the LV side in a defined manner. Furthermore, the parallel connection of the second transformer cell to the first transformer cell may ensure that the MV AC voltage can be coupled to the first transformer cell and to the second transformer cell, respectively, for example, without any further voltage drop or loss.

In an example, the auxiliary power circuitry may comprise a rectifier circuitry coupled to the one or more supply terminals of the second transformer. The rectifier circuitry may be configured to generate an auxiliary DC supply voltage based at least in part on the auxiliary AC supply voltage to provide DC power to the one or more components.

The rectifier circuitry may comprise an active and/or passive rectifier.

For example, the rectifier circuitry may comprise one or more diodes that are configured to rectify the auxiliary AC supply voltage.

It may be beneficial to provide DC power to the MV unit, as power consuming electrical components of the MV unit may require a DC power to function. For example, power electronics, a controlling circuitry (e.g., a controller) of the MV unit, or a cooling fan of the MV unit may require a DC power source to function. Via the rectifier circuitry respective DC power can be provided such that a power conversion by the electrical components of the MV unit may be avoided. The second transformer cell and the auxiliary power circuitry may thus function as an integrated auxiliary DC supply.

In an example, the auxiliary power circuitry may comprise: one or more DC-DC converters, preferably one or more high-frequency, HF, DC-DC converters, coupled to the rectifier circuitry, the one or more DC-DC converters configured to generate one or more auxiliary DC voltages for providing auxiliary DC power to one or more components of the MV unit.

For example, the rectifier circuitry may be configured to provide a rectified auxiliary DC supply voltage based on the auxiliary AC supply voltage. To provide a higher degree of freedom the rectified auxiliary DC supply voltage may be provided to a DC-DC converter which may be configured to transfer the rectified auxiliary DC supply voltage to another voltage level. For example, the second transformer cell may be configured to adapt the MV AC voltage to a certain voltage level based on the winding configuration of the second transformer. However, it may not always suffice to simply rectify the auxiliary AC supply voltage of the second transformer cell to provide auxiliary power to the MV unit. For example, the components of the MV unit may require a significantly lower voltage than can be provided by the auxiliary AC supply voltage.

Furthermore, two or more DC-DC converters may be coupled to the rectifier circuitry to generate two or more auxiliary DC voltages for providing to the MV unit. This may be beneficial for various reasons.

For example, a first DC-DC converter may be configured to provide a first DC voltage level, and a second DC-DC converter may be configured to provide a second DC voltage level, different from the first DC voltage level.

For example, different electrical components of the MV unit may require different voltage levels as DC power input. For example, a controller of the MV unit may require a different voltage level than a cooling fan of the MV unit as DC power input. The two or more DC-DC converters may enable that different DC voltage levels can be generated and distributed to the MV unit.

In an example, first DC-DC converter may be configured to provide a first DC voltage level, and a second DC-DC converter may be configured to provide a second DC voltage level, with the second DC voltage level being substantially equal to the first DC voltage level.

For example, different electrical components of the MV unit may require the same voltage levels as DC power input. For example, a controller of the MV unit may require the same voltage level as a cooling fan of the MV unit as DC power input. The two or more DC-DC converters may enable that different DC sources having the same DC voltage level can be generated such that each DC source can be provided to the respective component of the MV unit.

In an example, the one or more DC-DC converters may be configured to provide isolated DC voltages which can be arbitrarily selected to provide auxiliary power to a respective component of the MV unit.

In an example, the DC-DC converters may comprise HF DC-DC converters configured for HF applications, which may be beneficial as HF noise may be reduced at least in part which may be present in the rectified auxiliary AC supply voltage in view of the MV AC voltage.

In an example, the second transformer of the second transformer cell may be a multi-winding transformer comprising a primary winding having a primary winding terminal being electrically coupled to the MV AC terminal.

The multi-winding transformer may further comprise: a first secondary winding electrically coupled to a first supply terminal of the second transformer cell, the second transformer cell configured to generate a first auxiliary AC supply voltage at the first supply terminal from the MV AC voltage at the MV AC terminal; and a second secondary winding electrically coupled to a second supply terminal of the second transformer cell, the second transformer configured to generate a second auxiliary AC supply voltage at the second supply terminal from the MV AC voltage at the MV AC terminal.

The auxiliary power circuitry may be configured to provide power to the one or more components of the MV unit based at least in part on the first auxiliary AC supply voltage and the second auxiliary AC supply voltage.

The multi-winding transformer may be beneficial as a first auxiliary AC supply voltage and a second auxiliary AC supply voltage may be provided essentially at the same time at spatially different positions, based on the MV AC voltage. This may enable to provide different auxiliary power sources to the MV unit. For example, a first set of one or more DC voltage levels may be generated from the first auxiliary AC supply voltage, and a second set of one or more DC voltage levels may be generated from the second auxiliary AC supply voltage. The first set of one or more DC voltages may be provided to a first component of the MV unit, and the second set of one or more DC voltages may be provided to a second component different from the first component.

In an example, a first part of the rectifier circuitry may be coupled to the first supply terminal and configured to rectify the first auxiliary AC supply voltage which may be further shaped (e.g., via one or more DC-DC converters as described herein). A second part of the rectifier circuitry may be coupled to the second supply terminal and configured to rectify the second auxiliary AC supply voltage which may be further shaped (e.g., via one or more DC-DC converters as described herein).

In an example, the first and second auxiliary AC supply voltage may be substantially the same based on the winding configuration of the second transformer, particularly based on the configuration of the first and second secondary winding with respect to the primary winding. For example, the winding turns of the first and second secondary windings may be substantially the same.

In another example, the first and second auxiliary AC supply voltage may be different from each other based on the winding configuration of the second transformer, particularly based on the configuration of the first and second secondary windings with respect to the primary winding. For example, the winding turns of the first and secondary windings may be different from each other.

As the voltage output may be split to a first and second auxiliary AC supply voltage, a first auxiliary power path may be provided from the MV AC terminal via the primary winding and the first secondary winding to the first supply terminal of the second transformer cell, and a second auxiliary power path may be provided from the MV AC terminal via the primary winding and the second secondary winding to the second supply terminal of the second transformer cell. For the first and second auxiliary power path a respective auxiliary resonant frequency may be configured via the first resonant tank circuitry of the second transformer cell.

Due to the splitting of the auxiliary power by the first and second secondary winding of the second transformer a different LC-configuration for each auxiliary power path may be imposed onto the respective auxiliary power paths. The LC-configuration of the first resonant tank circuitry of the second transformer cell may be split into respective units, each unit defining an LC-configuration for the respective auxiliary power path.

In an example, a first unit of the first resonant tank circuit may be an LC-circuit configuration which provides a first auxiliary power path resonant frequency for the first auxiliary power path. For example, a first auxiliary transfer function of the first auxiliary power path can be given by a ratio of a first auxiliary AC supply voltage at a first supply terminal of the second transformer cell and the MV AC voltage at the MV AC terminal. The first unit's LC configuration may adapt the first auxiliary transfer function such that a first auxiliary power path resonant frequency can be provided in a defined manner for the first auxiliary power path.

In an example, a second unit of the first resonant tank circuit may be an LC-circuit configuration which provides a second auxiliary power path resonant frequency for the second auxiliary power path. For example, a second auxiliary transfer function of the second auxiliary power path can be given by a ratio of a second auxiliary AC supply voltage at a second supply terminal of the second transformer cell and the MV AC voltage at the MV AC terminal. The second unit's LC configuration may adapt the second auxiliary transfer function such that a second auxiliary power path resonant frequency can be provided in a defined manner for the second auxiliary power path.

Accordingly, each auxiliary power path may be configured for a respective resonant frequency via a respective resonant tank. In an example, the first and second unit of the first resonant tank circuit may share components.

For example, the first resonant tank circuit may be provided by a (leakage) inductance positioned at the primary side of the second transformer. In the multi-winding configuration, a first capacitor may be provided at the first secondary winding side (e.g., the first capacitor may be coupled between a node of the first supply terminal and a node of the first secondary winding). A second capacitor may be provided at the second secondary winding side (e.g., the second capacitor may be coupled between a node of the second supply terminal and a node of the first secondary winding). The first unit of the first resonant tank circuit may be provided by the LC-circuit configuration of the (leakage) inductance at the primary side of the second transformer and the first capacitor. The second unit of the first resonant tank circuit may be provided by the LC-circuit configuration of the (leakage) inductance at the primary side of the second transformer and the second capacitor.

In an example, the first auxiliary power path resonance frequency defined by the first unit may substantially be the same as the second auxiliary path resonant frequency defined by the second unit (e.g., by having the capacitances of the first and second capacitor substantially the same). In another example, the first auxiliary power path resonant frequency defined by the first unit may be different than the second auxiliary power path resonant frequency defined by the second unit (e.g., by having different capacitances of the first and second capacitor in the first resonant tank circuitry).

Notably, other variations for the first and second unit of the first resonant tank circuitry may be possible according to the present disclosure to provide separate LC-configurations for the different auxiliary power paths leading to different auxiliary resonant frequencies.

According to the present disclosure, when having multiple auxiliary power paths due to a multi-winding configuration, for each auxiliary power path a respective auxiliary resonant frequency may be provided. This may be beneficial in view of expected loads that may be applied to the different auxiliary power paths.

In an example, the second transformer cell, particularly the first resonant tank circuitry, may be configured to provide a first auxiliary path resonant frequency (for the first auxiliary power path) and a second auxiliary power path resonant frequency (for the second auxiliary power path) such that at a predetermined load at each auxiliary power path, particularly a respective maximum rated load, a voltage gain provided by the second transformer cell regarding the respective auxiliary power paths deviates from a unity voltage gain by no more than 20%, preferably 10 %, more preferably 5 %, more preferably 2 %. For example, a first voltage gain may be provided at a first supply terminal of the second transformer cell, a second voltage gain may be provided at a second supply terminal of the second transformer cell, which each voltage gain deviating from the unity voltage gain by no more than 20%, preferably 10 %, more preferably 5 %, more preferably 2 %.

In an example, the second transformer cell, particularly the first resonant tank circuitry, may be configured to provide a first auxiliary path resonant frequency (for the first auxiliary power path) and a second auxiliary power path resonant frequency (for the second auxiliary power path) wherein each of the first and second auxiliary power path resonant frequencies can deviate from a fundamental frequency of the MV AC voltage at the MV AC terminal by no more than 10 %, preferably 5 %, more preferably 2 %. The resonant frequency deviation in both auxiliary power paths with respect to the fundamental frequency of the MV AC voltage at the MV AC terminal may be kept small in a defined manner. This may be beneficial as power losses or other electrical disturbances between the main power path and an auxiliary power path may be reduced at least in part.

For example, a fundamental frequency f_{AC,MAIN} may be set for the MV AC voltage at the MV AC terminal. A first auxiliary power path resonant frequency f_{R,AUX,1} may be set for a first auxiliary power path (as described herein) wherein the first auxiliary power path resonant frequency f_{R,AUX,1} may be defined by a transfer function with the ratio of a first auxiliary AC supply voltage at a first supply terminal of the second transformer cell with respect to the MV AC voltage at the MV AC terminal. In such an example, f_{R,AUX,1} may deviate from f_{AC,MAIN} by no more than 10 %, preferably 5 %, more preferably 2 %. The first auxiliary power path frequency f_{R,AUX,1} may be set higher than F_{AC,MAIN}. A second auxiliary power path resonant frequency f_{R,AUX,2} may be set for a second auxiliary power path (as described herein) wherein the second auxiliary power path resonant frequency f_{R,AUX,2} may be defined by a transfer function with the ratio of a second auxiliary AC supply voltage at a second supply terminal of the second transformer cell with respect to the MV AC voltage at the MV AC terminal. In such an example, f_{R,AUX,1} may deviate from f_{AC,MAIN} by no more than 10 %, preferably 5 %, more preferably 2 %. The second auxiliary power path frequency f_{R,AUX,2} may be set higher than f_{AC,MAIN}.

As mentioned herein, the main power path resonant frequency may be selected close to the fundamental frequency (also considered a switching frequency) of the MV AC voltage, as well. Accordingly, in an example, a resonant frequency of the main power path may be close to a first resonant frequency of a first auxiliary power path and may be close to a second resonant frequency of a second auxiliary power path.

In an example, the second transformer of the second transformer cell may comprise three or more secondary windings, each of the three or more secondary windings electrically coupled to a respective supply terminal of the second transformer for generating a respective auxiliary AC supply voltage; the auxiliary power circuitry being configured to provide power to the one or more components of the MV unit based at least in part on the respective auxiliary AC supply voltages at the respective supply terminals. For example, the second transformer cell may comprise third secondary winding (or even more secondary windings).

The multi-winding transformer may be beneficial as a first auxiliary AC supply voltage, a second auxiliary AC supply voltage and at least a further auxiliary AC supply voltage may be provided essentially at the same time at spatially different positions, based on the MV AC voltage. This may enable to provide even more different power sources to the MV unit than with two secondary windings.

In an example, a third part of the rectifier circuitry may be coupled to the third supply terminal and configured to rectify the further auxiliary AC supply voltage which may be further shaped (e.g., via one or more DC-DC converters as described herein).

In an example, the first, second and further auxiliary supply voltage may be substantially the same based on the winding configuration of the second transformer, particularly based on the configuration of the first, second and third secondary winding with respect to the primary winding. For example, the winding turns of the first, second and third secondary windings may be substantially the same.

In another example, the first, second and further auxiliary supply voltage may be different from each other based on the winding configuration of the second transformer, particularly based on the configuration of the first, second and third secondary windings with respect to the primary winding. For example, the winding turns of the first, second and third secondary windings may be different from each other.

Furthermore, the other features and aspects stated for the secondary transformer having a first and second secondary winding may be applied to the example with three or more secondary windings, accordingly. For example, further auxiliary power paths may be generated which auxiliary resonant frequencies may be adapted by providing further units of the first resonant tank circuitry, according to the present disclosure.

In an example, the converter may further comprise a third transformer cell comprising a second resonant tank circuitry and a third transformer, the third transformer cell electrically connected to a supply terminal of the one or more supply terminals of the second transformer cell, the third transformer cell configured to generate a third transformer auxiliary AC supply voltage at one or more third transformer cell supply terminals of the third transformer cell from the auxiliary AC supply voltage at the supply terminal of the one or more supply terminals of the second transformer cell; the auxiliary power circuitry being configured to provide power to the one or more components of the MV unit based at least in part on the third transformer auxiliary AC supply voltage.

The herein described aspects of the first resonant tank circuitry may accordingly apply to the second resonant tank circuitry. Notably, the second resonant tank circuitry of the third transformer cell may comprise an LC-circuit configuration comprising at least one inductor and at least one capacitor (as described herein for the LC-circuit configuration of the first resonant tank circuitry).

The third transformer cell may enable to further transfer an auxiliary AC supply voltage provided at a supply terminal of the second transformer cell through a transformer action, particularly a transformer action by the third transformer. The third transformer may enable to further adapt the voltage level of the auxiliary AC supply voltage provided at the supply terminal of the second transformer cell via the winding configuration of the third transformer. For example, depending on the turn ratio of primary to secondary windings of the third transformer, the auxiliary AC supply voltage may be further lowered.

In an example, a further part of the rectifier circuitry may be coupled to the third transformer supply terminals to rectify the third auxiliary AC supply voltage such that a respective DC power may be supplied to the MV unit, as described herein.

Furthermore, the third transformer cell may enable to further split an auxiliary AC supply voltage provided at a supply terminal of the second transformer cell through the third transformer, if the third transformer is a multi-winding transformer.

In an example, the converter may further comprise a third transformer cell comprising a second resonant tank circuitry and a third transformer, the third transformer cell electrically connected to a supply terminal of the one or more supply terminals of the second transformer cell, wherein the third transformer is a multi-winding transformer comprising: a third transformer primary winding having a third-transformer primary winding terminal electrically coupled to the first supply terminal of the second transformer cell. The third transformer may further comprise a third-transformer first-secondary winding having a third-transformer first-secondary winding terminal electrically coupled to a first third-transformer-cell supply terminal, the third transformer cell configured to generate a fourth auxiliary AC supply voltage at the first third-transformer supply terminal from the first auxiliary AC voltage at the first supply terminal of the second transformer cell.

The third transformer may further comprise a third-transformer second-secondary winding having a third-transformer second-secondary winding terminal coupled to a second third transformer supply terminal, the third transformer cell configured to generate a fifth auxiliary AC supply voltage at the second third-transformer supply terminal from the first auxiliary AC voltage at the first supply terminal of the second transformer cell.

The auxiliary power circuitry may be configured to provide power to the one or more components of the MV unit based at least in part on the fourth auxiliary AC supply voltage and the fifth auxiliary AC supply voltage.

In an example, the auxiliary power circuitry may be further configured to provide power to the one or more components of the MV unit based at least in part on the second auxiliary AC supply voltage from the second transformer secondary winding.

According to the present disclosure, other features and aspects may be accordingly combined with the example, where the auxiliary power circuitry is configured to provide power to the one or more components of the MV unit based at least in part on the fourth and fifth auxiliary AC supply voltage. For example, further rectification, and DC-DC converters may be provided for this example, as well, as described herein.

In an example, the LV unit may further comprise: a control circuitry (e.g., a controller) coupled to the at least one AC/DC cell of the LV unit, the control circuitry configured to apply a start-up voltage at the LV AC terminal of the AC/DC cell; the first transformer cell being further configured to generate a transformed start-up voltage at the MV AC terminal from the start-up voltage at the LV AC terminal; the second transformer cell being further configured to generate the auxiliary AC supply voltage at a supply terminal of the one or more supply terminals of the second transformer cell from the transformed start-up voltage at the MV AC terminal.

For example, the control circuitry may be configured to start a providing of the auxiliary power to the MV unit by applying the start-up voltage at the LV AC terminal of the AC/DC cell of the LV unit.

In an initial state, an auxiliary power may not be provided to the MV unit, as the existence of the auxiliary power may depend on an MV AC voltage being provided at the MV AC terminal which can require auxiliary power being provided to the MV unit. Via the herein described mechanism, the auxiliary power may be activated from the LV side, as the main power path may function in both directions (from MV side to LV side and vice versa). By applying a start-up voltage at the LV AC terminal, the first transformer cell will transform the start-up voltage and provide an according AC voltage at the MV AC terminal. This may suffice for the second transformer cell to generate an auxiliary AC supply voltage at a supply terminal of the second transformer cell, which may activate an auxiliary power path to the MV unit as described herein.

With an auxiliary power being provided to the MV unit (e.g., to a controlling circuitry for controlling the DC/AC cell of the MV unit), the main power path from the MV side to the LV side may be activated.

Subsequently, the MV AC voltage at the MV AC terminal of the main power path from the MV side to the LV side may be used to power the MV unit, as described herein.

In an example, the first transformer cell may be configured to withstand a first basic insulation level (BIL) to galvanically insulate the MV side from the LV side of the converter; and the second transformer cell may be configured for lower dielectric requirements (for lesser insulation) than the first transformer cell. In particular, the second transformer cell may be configured to withstand less than the first basic insulation level (for example, a second basic insulation level, wherein the second basic insulation level corresponds to at most 50 % of the first basic insulation level, preferably at most 20 % of the first basic insulation level, more preferably at most 10 % of the first basic insulation level).

According to the present disclosure, a less insulated second transformer may be used compared to the first transformer, as lesser insulation requirements may be necessary on the MV side. This may reduce cost and/or size of the herein described auxiliary power configuration.

In an example, with the at least one DC/AC cell being configured to generate an MV AC voltage from a MV DC voltage, an absolute value of the MV DC voltage may be in the range of 1 kV to 52 kV. The second transformer cell and the auxiliary power circuitry may be configured to provide as auxiliary DC power an auxiliary DC voltage to the one or more components having an absolute value in the range of 6 V to 200 V.

In an example, the second transformer may not be connected to the LV side of the converter. For example, the second transformer may not be connected to nodes of the LV unit.

In an example, the second transformer may only be connected to the MV side of the converter. For example, the second transformer may only be connected to nodes of the MV unit. For example, the second transformer cell, the auxiliary power circuitry and/or the third transformer cell may be part of the MV unit.

A second aspect relates to a method for operating a converter for transferring power from a medium voltage, MV, side to a low voltage, LV, side, comprising: by at least one DC/AC cell of a MV unit at the MV side: generating an MV AC voltage from a MV DC voltage at a MV AC terminal of the at least one DC/AC cell; by at least one AC/DC cell of a LV unit at the LV side: generating a DC voltage from a LV AC voltage at a LV AC terminal of the at least one AC/DC cell; by a first transformer cell, comprising a first transformer, the first transformer cell being electrically connected to the MV AC terminal and the LV AC terminal: generating the LV AC voltage at the LV AC terminal from the MV AC voltage at the MV AC terminal; by a second transformer cell comprising a first resonant tank circuitry and a second transformer, the second transformer cell being electrically connected to the MV AC terminal: generating an auxiliary supply voltage at one or more supply terminals of the second transformer cell from the MV AC voltage at the MV AC terminal; by an auxiliary power circuitry (90): providing power to one or more components of the MV unit based at least in part on the auxiliary supply voltage at the one or more supply terminals.

In an example, the method may further comprise: by a control circuitry coupled to the at least one AC/DC cell of the LV unit: applying a start-up voltage at the LV AC terminal of the AC/DC cell; by the first transformer cell: generating a transformed start-up voltage at the MV AC terminal from the start-up voltage at the LV AC terminal; by the second transformer cell: generating the auxiliary AC supply voltage at one or more supply terminals of the second transformer from the transformed voltage signal at the MV AC terminal.

For example, the method may comprise starting a provisioning of the auxiliary power to the MV unit by applying a start-up voltage at the LV AC terminal of the AC/DC cell.

Herein described features related to method operations described with respect to the converter or device may accordingly be applied to the herein described method. In the same manner, herein described features related to a method or computer program may be accordingly applied to the herein described converter or device.

In an example, the herein described converter comprises a solid-state transformer, SST. For example, the herein described converter may be configured as a module of the SST.

### Brief description of the figures

- FIG. 1: shows a converter according to examples of the present disclosure, particularly a solid-state transformer, SST.
- FIG. 2: shows a first embodiment of a converter according to examples of the present disclosure.
- FIG. 3: shows a second embodiment of a converter according to examples of the present disclosure.
- FIG. 4: shows a third embodiment of a converter according to examples of the present disclosure.
- FIG. 5: shows a fourth embodiment of a converter according to examples of the present disclosure.
- FIG. 6: shows schematic examples of a transfer function of a converter according to examples of the present disclosure, to schematically show the characteristics of the herein described voltage gain in an auxiliary power path.

### Detailed description of the figures and of embodiments

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. In some instances, the same or similar components may be assigned a different reference number, e.g. due to a different configuration within the electronic circuit. Generally, only the differences with respect to the individual embodiments are described. Unless specified otherwise, the description of a part or aspect in one embodiment applies to a corresponding part or aspect in another embodiment as well.

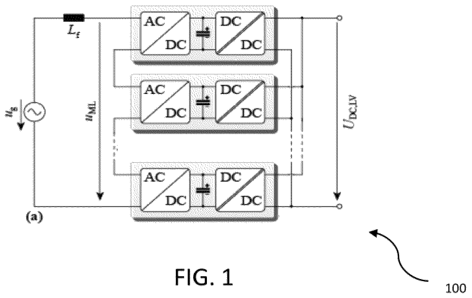

FIG. 1 shows a converter 100 according to examples of the present disclosure, particularly a solid-state transformer, SST. The converter 100 may convert a MV voltage, particularly U_{ML}, to a LV voltage, particularly U_{DC,LV}. The converter 100 may have a number of m of modules, each module may correspond to the converter 100 as described herein. The converter 100 may be a medium-frequency or high-frequency converter or transformer. The converter 100 may be a solid-state transformer and/or a medium-frequency solid state transformer.

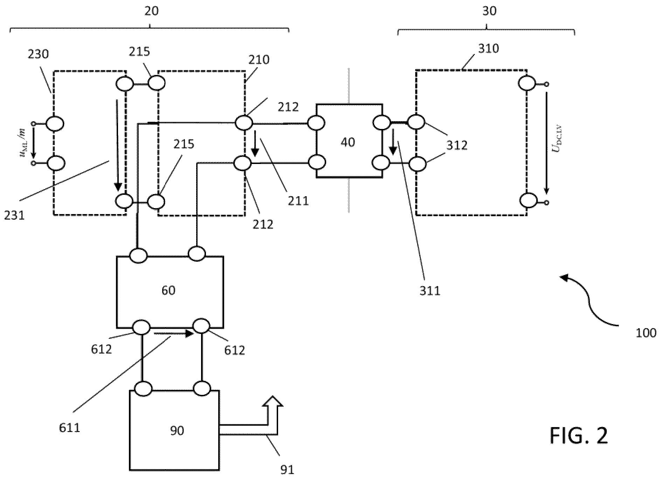

FIG. 2 shows a first embodiment of a converter 100 according to examples of the present disclosure. For example, the converter 100 of FIG. 2 may be a module of the SST of FIG. 1.

The converter 100 comprises a MV unit 20 at an MV side of the converter 100 and an LV unit 30 at an LV side of the converter 100.

The converter 100 may comprise a DC/AC cell 210 having a MV AC terminal 212. The DC/AC cell 210 may be configured for generating a MV AC voltage 211 at the MV AC terminal 212 from a MV DC voltage. The MV DC voltage may be provided at an input terminal 215 of the DC/AC cell 210.

In an example, the converter 100 may be configured to convert a converter input AC voltage u_{ML}/m at the MV side to a converter output DC voltage U_{DC,LV} at the LV side. For example, the converter 100 may comprise an MV AC/DC cell 230 at the MV side (as shown in FIG. 2). The MV AC/DC cell 230 may be configured to convert a converter input MV AC voltage, particularly a MV AC voltage u_{ML}/m, to a MV DC voltage 231. Particularly, the output of the MV AC/DC cell 230 may be coupled to a DC/AC cell input terminal 215 of the DC/AC cell 210. The DC/AC cell 210 may generate the MV AC voltage 211 at the MV AC terminal 212 (functioning as an output terminal of the DC/AC cell 210) based on the MV DC voltage 231 provided by the MV AC/DC cell 230 at the DC/AC cell input terminal 215.

The converter 100 may also comprise one or more further DC/AC cells or AC/DC cells. The MV unit of the converter 100 may be also considered to be a multi-stage MV unit having one or more further DC/AC cells or AC/DC cells than the DC/AC cell 210.

In another example, the converter 100 may be configured to convert a DC voltage at the MV side to a DC voltage at the LV side. For example, the converter 100 may receive a MV DC voltage 231 provided otherwise such that the MV AC/DC cell 230 may not be necessary. For example, the MV DC voltage 231 may be directly provided at the DC/AC cell 210.

Coming back to the example of FIG. 2, the converter 100 may further comprise a first transformer cell 40 comprising a first transformer (not shown in FIG. 2). An input terminal of the first transformer cell 40 may be electrically connected to the MV AC terminal 212 to provide the MV AC voltage to the first transformer cell 40. Via the first transformer of the first transformer cell 40 the MV AC voltage may be converted to a LV AC voltage at an output terminal of the first transformer cell 40. The converter 100 may further comprise an AC/DC cell 310 being part of an LV unit at an LV side of the converter 100. The output terminal of the first transformer cell 40 may be electrically connected to an LVAC terminal 312 (an input terminal) of the AC/DC cell 310. The AC/DC cell 310 may be configured to convert the MV AC voltage at the LV AC terminal 312 to a MV DC voltage (e.g., U_{DC,LV}) at an output terminal.

The main power path may be considered to go from the MV side to the LV side of the converter 100 (e.g., from u_{ML}/m to U_{DC,LV}).

As described herein, an electrical power may need to be provided to one or more electrical components of the MV unit 20 for the converter 100 to function. For example, control circuitry for controlling the DC/AC cell 210 and/or power electronics of the MV unit may need a certain supply voltage. Furthermore, power may be required at the MV unit for cooling components (e.g., fans) of electrical components of the MV unit.

Auxiliary power may be provided to the MV unit via the interaction of the second transformer cell 60 and the auxiliary power circuitry 90, as described herein.

The second transformer cell 60 may comprise a first resonant tank circuitry and a second transformer (not shown in FIG. 2). The second transformer cell 60 may comprise on or more supply terminals for connecting to the auxiliary power circuitry. The one or more supply terminals may be regarded as output terminals of the second transformer cell 60. An input terminal of the second transformer cell 60 may be electrically connected to the MV AC terminal 212 of the DC/AC cell 210. Via the second transformer of the second transformer cell 60 the MV AC voltage may be converted to a different AC voltage (e.g., via a specific transformer winding configuration of the second transformer) such that an auxiliary AC supply voltage 611 may be generated at (at least) one of the one or more supply terminals of the second transformer cell 60. Via the connection between the respective supply terminal of the second transformer cell 60 the auxiliary AC supply voltage 611 may be provided to the auxiliary power circuitry. The auxiliary power circuitry 90 may be configured to further shape the auxiliary AC supply voltage 611 in a defined manner to provide auxiliary power 91 to one or more components of the MV unit 20.

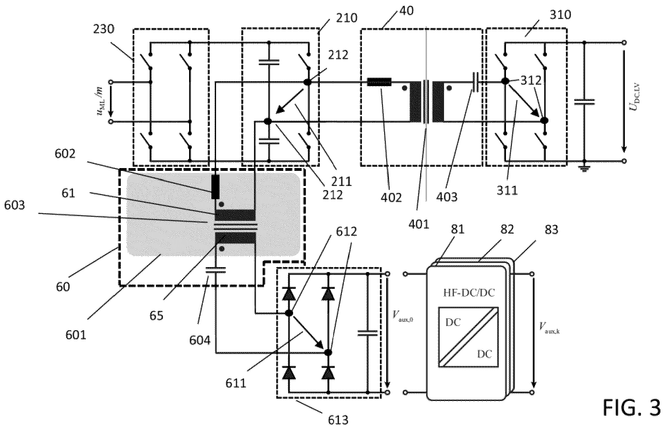

FIG. 3 shows a second embodiment of a converter according to the present disclosure according to examples of the present disclosure. Particularly, FIG. 3 shows more details of a converter 100 according to the herein described examples.

For example, the MV AC/DC cell 230 may comprise a full-bridge configuration, as shown in FIG. 3.

For example, the DC/AC cell 210 of the MV unit may comprise a half-bridge configuration with a voltage-divider configuration comprising two capacitors as shown in FIG. 3.

For example, the AC/DC cell 310 of the LV unit 30 may comprise a full-bridge configuration. Furthermore, an output capacitor may be connected in parallel to the AC/DC cell 310 of the LV unit, e.g., for filtering certain frequencies.

The first transformer cell 40 may comprise a first transformer 401. The first transformer 401 may have a winding configuration (e.g., a turns ratio regarding the primary winding with respect to the secondary winding of the first transformer 401) such that the MV AC voltage 211 can be transferred to a LV AC voltage 311.

In an example, the first transformer cell 40 may comprise a resonant tank circuitry. In the example, of FIG. 3 the resonant tank circuitry comprises a first transformer cell inductor 402, and a first transformer cell capacitor 403. The first transformer cell inductor 402 may comprise a leakage inductance of the first transformer 401 and/or a separate inductor positioned in the electrical circuit of the first transformer cell 40, as shown in FIG. 3. The first transformer cell capacitor 403 may comprise a separate capacitor positioned in the electrical circuit of the first transformer cell, as shown.

The herein described aspects of the first resonant tank circuitry of the second transformer cell 60 may accordingly apply to the resonant tank circuitry of the first transformer cell 40 (and vice versa).

Via the first transformer cell 40 not only the voltage adaptation from the MV AC voltage 211 to the LV AC voltage 311 can be enabled. Furthermore, a defined resonant frequency may be configured via the configuration of the first transformer 401 and/or via the resonant tank circuitry of the first transformer cell 40. The resonant tank circuitry of the first transformer cell 40 may comprise an LC-circuit configuration comprising at least one inductor and at least one capacitor wherein the first transformer 401 may have a contribution to the LC-circuit configuration. The resonant frequency of the main power path may be configured based on the LC-circuit configuration of the first transformer cell 40.

In the shown example of FIG. 3, a particular resonance frequency may be set via considering the leakage inductance or choosing the inductance of the first transformer cell inductor 402 and choosing the capacitance of the first transformer cell capacitor 403.

The converter 100 may further comprise the second transformer cell 60. The input terminal of the second transformer cell 60 may be (directly) connected to the MV AC terminal 212 of the DC/AC cell 210 of the MV unit 20. In other examples, the MV AC terminal 212 may be electrically coupled to the MV unit 20, e.g., via a resistor or other electrical component. Via the connection or coupling of DC/AC cell 210 to second transformer cell 60 the MV AC voltage 211 may be provided not only to the first transformer cell 40 but also to the second transformer cell 60.

The second transformer cell 60 may comprise a second transformer 603. The second transformer 603 may comprise a primary winding 61 and a secondary winding 65. Via the second transformer 603 of the second transformer cell 60 the MV AC voltage 211 may be converted to a different AC voltage (e.g., via a specific transformer winding configuration of the second transformer) such that an auxiliary AC supply voltage 611 may be generated at (at least) one of the one or more supply terminals of the second transformer cell 60. In FIG. 3 the transformer cell 60 comprises one supply terminal 612.

The second transformer cell 60 may comprise the herein described first resonant tank circuitry. In the example of FIG. 3, the first resonant tank circuitry comprises a second transformer cell inductor 602 (e.g., a leakage inductance of the second transformer) and a separate second transformer cell capacitor 604. However, other LC-circuit configurations for the first resonant tank circuitry may be possible, as described herein (e.g., a separate second transformer cell inductor 602 may be used instead of the leakage inductance of the second transformer). Also, the second transformer cell capacitor 604 may be positioned at the primary side of the second transformer 603 (at the side of the primary winding 61 of the second transformer). The second transformer cell inductor 602 (e.g., a separate inductor) may also be positioned at the secondary side of the second transformer 603 (at the side of the secondary winding 65). Via the LC-circuit configuration of the second transformer cell a defined resonant frequency for the auxiliary power path may be enabled, as described herein. As shown in FIG. 3 the MV AC voltage 211 may be applied at the transformer cell 60 but may not be directly applied to the second transformer 603 since a voltage drop can occur along the second transformer cell inductor 602. Furthermore, the voltage output directly at the secondary winding 65 of the second transformer 603 may slightly differ from the voltage output at the supply terminal 612 due to the electrical influence of the second transformer cell capacitor 604 (e.g., due to an additional voltage drop). However, regarding the functional view on the cell, the second transformer cell 60 transforms the MV AC voltage 211 to an auxiliary AC supply voltage 611 at the supply terminal 612.

The primary winding 61 of the second transformer 603 may be coupled to the MV AC terminal 212. The primary side of the second transformer 603 may be regarded to be at the MV AC terminal side of the second transformer cell 60. The secondary winding 65 of the second transformer 603 may be coupled to the one or more supply terminals, e.g., supply terminal 612. The secondary side of the second transformer 603 may be regarded to be at the supply terminal side of the second transformer cell 60. Due to the electrical (galvanic) decoupling between the primary and secondary windings 61, 65 of the second transformer 603, the voltages at the one or more supply terminals 612 may be accordingly electrically (galvanically) decoupled from the MV AC voltage 211.

As seen in Fig. 3, the second transformer cell 60 may be connected in parallel to the first transformer cell 40, according to the present disclosure. Particularly, the second transformer cell 60 may be connected in parallel at the MV side of the first transformer cell 40 since the second transformer cell 60 is connected to the MV AC terminal 212 just as the first transformer cell 40. This may ensure that the second transformer cell 60 (and the auxiliary power circuitry 90 coupled thereto) is not connected to the LV side of the first transformer cell 40, particularly not connected to the LV side of the first transformer 401. The second transformer cell 60 (and the auxiliary power circuitry 90) may thus be considered to be part of the MV side or the MV unit 20 only requiring the insulation requirements of the MV side or the MV unit 20 of the converter.

In example, the second transformer 603 may have a winding configuration (e.g., a turns ratio regarding the primary winding with respect to the secondary winding of the second transformer 603) such that the MV AC voltage 211 can be transferred to an auxiliary AC supply voltage 611 that has a lower peak-to-peak value than the MV AC voltage 211. For example, the secondary winding of the second transformer 603 may have more turns than the primary winding of the second transformer 603. In another example, the second transformer 603 may have a winding configuration such that the MV AC voltage 211 can be transferred to an auxiliary AC supply voltage 611 having substantially the same peak-to-peak value as the MV AC voltage 211. For example, the secondary winding of the second transformer 603 may have substantially the same number of turns as the primary winding of the second transformer 603.

The supply terminal 612 of the second transformer cell may be directly coupled to a rectifier circuitry 613 of the auxiliary power circuitry 90. The rectifier circuitry 613 may comprise a diode configuration to rectify the auxiliary AC supply voltage 611 to a rectified DC voltage.

The diode configuration of the rectifier circuitry 613 may be configured as a full-wave rectifier.

In the example of Fig. 3, the diode configuration comprises a first and second diode pair, with the diodes of a diode pair being connected in series, and the first and second diode pair being connected parallel to each other. A first terminal point of the supply terminal 612 may be connected to a node between the diodes of the first diode pair, and a second terminal point of the supply terminal 612 may be connected between the diodes of the second diode pair. The first and second diode pair may be further connected to a first output node and a second output node defining an output terminal of the rectifier circuity 613. The diode configuration of FIG. 3 may form a diode bridge. Depending on the sign of the voltage wave form of the auxiliary supply voltage 611 at the supply terminal 612, a rectified voltage wave form may be outputted at the output of the rectifier circuitry 613. A capacitor may be connected parallel to the output of the rectifier circuitry 613 (as shown in FIG. 3), e.g., for filtering out certain frequency ranges which may further improve the rectification (e.g., by smoothing the rectified voltage waveform).

In conclusion, via the rectifier circuitry 613 a rectified auxiliary AC supply voltage may be generated out of the auxiliary AC supply voltage 611 provided at the supply terminal 612. The rectified AC supply voltage at the output of the rectifier circuitry may be a (substantially) auxiliary DC supply voltage.

In some examples, it may suffice to provide the rectified AC supply voltage (the auxiliary DC supply voltage) to one or more components of the MV unit to power the respective components.

In other examples, a further DC/DC conversion may be provided. For example, the output of the rectifier circuitry 613 may be electrically coupled to a DC/DC converter cell, particularly a HF DC/DC converter cell, as shown in FIG. 3. The DC/DC converter cell may comprise one or more DC/DC converters, particularly HF DC/DC converters. In Fig. 3 a first, second and third DC/DC converter 81, 82, 83 are shown.

A DC/DC converter of the DC/DC converter cell may be configured to generate a defined auxiliary DC voltage Vₐᵤₓ based on the rectified AC supply voltage (auxiliary DC supply voltage) provided from the rectifier circuitry 613. Each DC/DC converter 81, 82, 83 may provide a separate auxiliary DC voltage V_{aux,k} to the MV unit. For example, the voltage level of the auxiliary DC supply voltage may be based on the power requirements of the one or more components of the MV unit. For example, a first component of the MV unit may require a different DC voltage level than a different second component of the MV unit. Accordingly, different DC/DC converters may be configured to provide different auxiliary DC voltages.

In an example, each DC/DC converter 81, 82, 83 may be configured to provide a DC voltage to a different component of the MV unit. For example, the first DC/DC converter 81 may be configured to provide a first auxiliary DC voltage V_{aux,1} to a first component (e.g., to a first control circuitry for controlling the DC/AC cell 210), the second DC/DC converter 82 may be configured to provide the first auxiliary DC voltage V_{aux,1} to a second component (e.g., to a second control circuitry for controlling the MV AC/DC cell 230), the third DC/DC converter 81 may be configured to provide a second auxiliary DC voltage V_{aux,2} to a third component (e.g., to a fan for cooling the first and/or second control circuitry).

In an example, a single DC/DC converter may be configured to provide a DC voltage to two different components of the MV unit, e.g., via according power transmission lines connecting the DC/DC converter output to the power input of the respective components. For example, the first DC/DC converter 81 may be configured to provide the first auxiliary DC voltage V_{aux,1} to a first component (e.g., to a first control circuitry for controlling the DC/AC cell 210), and to a second component (e.g., to a second control circuitry for controlling the MV AC/DC cell 230).

As described herein, auxiliary power may be provided to the MV unit via the auxiliary power path enabled by the second transformer cell 60 and the auxiliary power circuitry 90. Particularly, due to the herein described decoupling of the second transformer cell 60 from the LV side the electrical components of the second transformer cell 60 (particularly, the second transformer 603) may be dimensioned in view of lesser insulation requirements than the components of the first transformer cell 40. This may reduce cost and/or size of the converter 100 while enabling a reliable auxiliary power path to the MV unit 20.

As described herein, the second transformer cell 60 may be configured to provide an auxiliary resonant frequency such that at a predetermined load, particularly a maximum rated load, (of the second transformer cell) a voltage gain provided by the second transformer cell deviates from a unity voltage gain by no more than 20%, preferably 10 %, more preferably 5 %, more preferably 2 %.

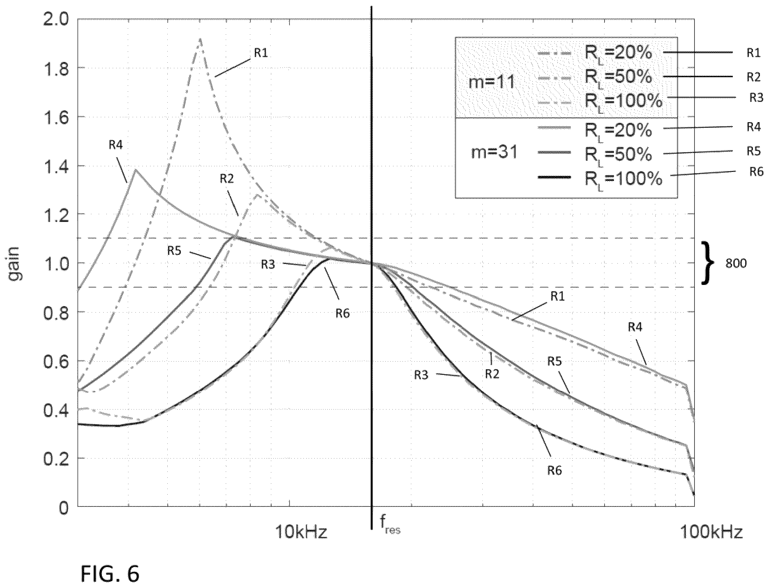

FIG. 6 shows schematic examples of a transfer function of a converter according to examples of the present disclosure, to show the characteristics of the herein described voltage gain in an auxiliary power path. The transfer function shows the frequency at the x-axis, and the voltage gain at the y-axis. With respect to the example of FIG. 3, the transfer functions of FIG. 6 may show exemplary transfer functions of the voltage ratio between the supply terminal 611 (or a load terminal directly at the load) and the MV AC terminal 212. In FIG. 6, two types of resonance configurations (e.g., of the second transformer cell 60) are shown, the first resonance configuration labeled m=11, the second resonance configuration labeled m=31. The different types of resonance configurations may be different resonance circuits (e.g., with different LC-configurations). Furthermore, FIG. 6 shows the voltage gain for different loads for each resonance configuration. For the first resonance configuration (m=11), a first load R1, a second load R2, and a third load R3 are shown, with the third load being a maximum rated load, the first load R1 being 20 % of the maximum rated load, and the second load R2 being 50 % of the maximum rated load. For the second resonance configuration (m=31), a second-configuration first load R1, a second-configuration second load R2, and a second-configuration third load R3 are shown, with the second-configuration third load being a maximum rated load, the second-configuration first load R1 being 20 % of the maximum rated load, and the second-configuration second load R2 being 50 % of the maximum rated load.

Furthermore, FIG. 6 shows the resonant frequency fᵣₑₛ provided by the second transformer cell 60 (or another auxiliary power path, as described herein).

According to the present disclosure, the resonant frequency fᵣₑₛ may be chosen such that for a given (e.g., predetermined) load the voltage gain does not deviate from unity gain by more than 20 %, preferably 10 %. The allowed deviation range 800 is exemplarily labeled in FIG. 6 where it is a 10 % deviation of the voltage gain. For example, if the switching frequency of the MV AC voltage is at the resonant frequency fᵣₑₛ unity gain would occur, which may be a beneficial configuration (as power losses may be reduced at least in part). If the switching frequency of the MV AC voltage deviates from the resonant frequency fᵣₑₛ the voltage gain may be more dependent on the load and the voltage gain may differ from unity gain.

Accordingly, the second transformer cell 60 may be configured to provide a resonant frequency fᵣₑₛ in view of the load and the switching frequency such that the deviation of the voltage gain with respect to the unity gain can be kept in a defined range. This may provide that the voltage gain is kept 20 % above or below the unity gain, preferably 10 % above or below unity gain, which may be beneficial as parasitic effects may be reduced at least in part.

The aspects explained for FIG. 6 may accordingly be applied to the other examples described herein (e.g., to other auxiliary power paths).

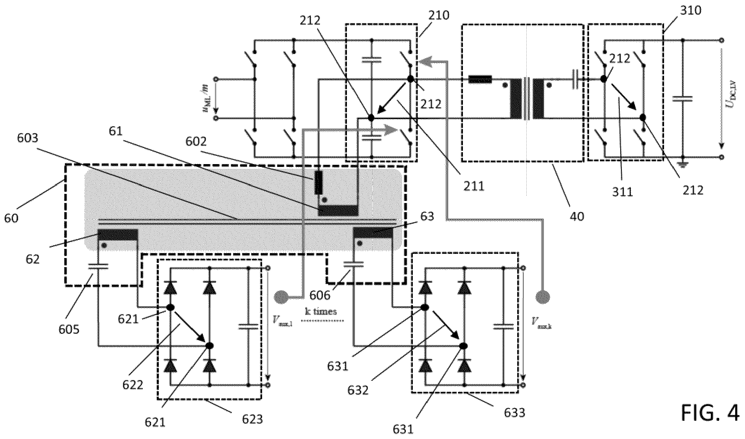

FIG. 4 shows a third embodiment of a converter according to the present disclosure according to examples of the present disclosure. The third embodiment could be regarded as an extension of the second embodiment shown in FIG. 3. In FIG. 4 the main power path may be the same main power path as described for FIG. 3. The auxiliary power path to the MV unit is slightly different but based on the same concepts as described for FIG. 3. In general, further concepts that are described with respect to FIG. 3 may accordingly be applied to FIG. 4.

The third embodiment in FIG. 4 comprises a second transformer cell 60 having a second transformer 603, and a first resonant tank circuitry, with the second transformer 603 having a primary winding 61, and a first and second secondary winding 62, 63. Each secondary winding of the second transformer 603 is coupled to a respective supply terminal of the second transformer cell 60 to provide auxiliary AC supply voltages. The first secondary winding 62 may be coupled to a first supply terminal 621 of the second transformer cell 603, and the second secondary winding 63 may be coupled to a second supply terminal 631 of the second transformer cell 603.

The respective auxiliary AC supply voltages are coupled to a rectifier circuitry and a DC/DC converter cell to provide power to the MV unit 20, as described herein. The first supply terminal 621 may be coupled to a first part 623 of the rectifier circuitry, the second supply terminal 631 may be coupled to a second part of the rectifier circuitry. The first and second parts 623, 633 may be independent from each other and may also be considered to be separate rectifier circuits, as described for FIG. 3. The first and second parts 623, 633 may each generate a rectified auxiliary AC supply voltage (an auxiliary DC supply voltage Vₐᵤₓ) which may be used to provide power to one or more components of the MV unit 20. In an example, a first DC/DC cell having one or more DC/DC converters may be coupled to the first part 623 of the rectifier circuitry, to provide the same technical capabilities as described for FIG. 3 (e.g., for further adapting the voltage level in view of the MV unit 20). In an example, a second DC/DC cell having one or more DC/DC converters may be coupled to the second part 633 of the rectifier circuitry, to provide the same technical capabilities as described for FIG. 3.

Due to the two secondary windings of the second transformer 603 the auxiliary power path may be split into two auxiliary power paths. Particularly, a first auxiliary power path may be generated by the power conversion from the primary winding 61 via the first secondary winding 62 to the first supply terminal 621, and a second auxiliary power may be generated by the power conversion from the primary winding 61 via the second secondary winding 63 to the second supply terminal 631. Via the transformer action of the second transformer 603 the MV AC voltage 211 at the input terminal of the second transformer cell 60 may be transferred to a first auxiliary AC supply voltage 622 at the first supply terminal 621. Furthermore, the MV AC voltage 211 at the input terminal of the second transformer cell 60 may be transferred to a second auxiliary AC supply voltage 632 at the second supply terminal 631.

The first and second auxiliary AC supply voltages 622, 632 may be different from each other or may be substantially the same based on the winding configuration of the second transformer 603 (e.g., the turn ratios of the first and second secondary windings may be different or may substantially be the same with respect to the primary winding of the second transformer 603).

Due to the splitting into two auxiliary power paths, the first resonant tank circuitry of the second transformer cell may be accordingly split into a first unit of the first resonant tank circuitry for the first auxiliary power path, and a second unit of first resonant tank circuitry for the second auxiliary power path.

In the example of FIG. 4, the first unit of the first resonant tank circuitry may comprise the herein described second transformer cell inductor 602 and a first capacitor 605. The second unit of the first resonant tank circuitry may comprise the herein described second transformer cell inductor 602 and a second capacitor 606. The first and second units of the first resonant tank circuitry may thus form a first and second LC-configuration. Notably, other LC-configuration as shown in FIG. 4 may be possible according to the present disclosure. For example, more advanced LC-configurations may be possible than shown, also a capacitor of a LC-configuration may be positioned at the primary side of the second transformer, and/or an inductor of a LC-configuration may be positioned at the primary side of the second transformer.

Each unit of the first resonant tank circuitry may be adapted to a certain resonance frequency in view of the LC-configuration of the respective units. For example, a resonance frequency may be adapted in view of dimensions of the respective inductor and capacitor and the circuit integration of the respective inductor and capacitor. For example, the first unit of the first resonant tank circuitry may be configured for a first resonance frequency, and the second unit of the first resonant tank circuitry may be configured for a second resonance frequency. The first and second resonance frequency may substantially be the same. In another example, the first and second resonance frequency may be different from each other.

In an example, the resonance frequencies may be adapted in view of the fundamental frequency of the MV AC voltage 211 to be provided at the MV AC terminal 212. For example, each resonant frequency of the auxiliary power paths may deviate from the fundamental frequency of the MV AC voltage 211 provided at the MV AC terminal 212 by no more than 10%, 5% or 2%. This may reduce coupling inefficiencies of the MV AC voltage 211 to the auxiliary power paths at least in part. For example, it may be predetermined what the fundamental frequency of the MV AC voltage 211 will be such that the resonant frequencies of the auxiliary power paths can be accordingly configured.

In an example, as described herein, the first unit of the first resonant tank circuitry, may be configured to provide a first auxiliary path resonant frequency (for a first auxiliary power path) and a second auxiliary power path resonant frequency (for a second auxiliary power path) such that at a predetermined load at each auxiliary power path, particularly a respective maximum rated load, a voltage gain provided by the second transformer cell regarding the respective auxiliary power paths deviates from a unity voltage gain by no more than 20%, preferably 10 %, more preferably 5 %, more preferably 2 %. For example, the voltage gain from the MV AC terminal 212 to the first supply terminal 621 (or a supply terminal directly at the load) may deviate from a unity voltage gain by no more than 20 % for a given load and switching frequency, and the voltage gain from the MV AC terminal 212 to the second supply terminal 621 (or a supply terminal directly at the load) may deviate from a unity voltage gain by no more than 20 % for a given load and switching frequency,

In other examples, the second transformer 603 of the second transformer cell 60 may comprise more than two secondary windings with each secondary winding being coupled to a respective supply terminal (e.g., a third secondary winding may be coupled to a third supply terminal, a fourth secondary winding may be coupled to a fourth supply terminal). An according part of the auxiliary power circuitry may be coupled to each respective supply terminal as described herein with respect to the first and second supply terminal 621, 631 (the according configuration indicated as "k times" in FIG. 4). Furthermore, for each secondary winding a respective resonance frequency may be set for each auxiliary power path, as described herein (e.g., by choosing a specific LC-configuration for each auxiliary power path).

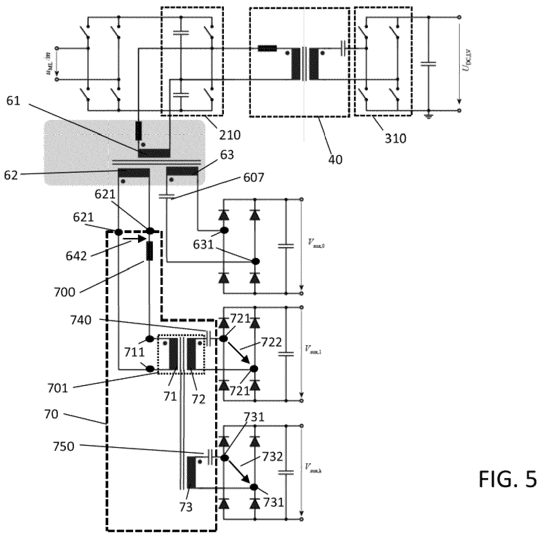

FIG. 5 shows a fourth embodiment of a converter according to the present disclosure according to examples of the present disclosure. As can be seen in FIG. 5, the embodiment of FIG. 5 can be considered an extension of the embodiment of FIG. 4, particularly an extension of the first auxiliary power path from the primary winding 61 to the first secondary winding 62. Aspects and features described with respect to FIG. 4 may thus accordingly be applied to the embodiment of FIG. 5.

The difference in FIG. 5 is, that a further third transformer cell 70 is integrated into the first auxiliary power path. The third transformer cell 70 may comprise a third transformer 701. In the example of FIG. 5, the third transformer 701 may comprise a multi-winding transformer. The third transformer 701 may comprise a third-transformer primary winding 71, and a first third-transformer secondary winding 72, and a second third-transformer secondary winding 73. The third-transformer primary winding 71 may be coupled to the first supply terminal 621 of the second transformer cell 60. Hence, the first auxiliary AC supply voltage provided at the first supply terminal 621 may be coupled into the third transformer cell 70.

The first third-transformer secondary winding 72 may be coupled to a first third-transformer cell supply terminal 721. The second third-transformer secondary winding 73 may be coupled to a second third-transformer cell supply terminal 731.

As explained for the multi-winding transformer 601 shown in FIG. 3, in the same manner the third transformer 701 may enable a further splitting of the first auxiliary power path. The third transformer 701 may enable that a voltage input at the third transformer primary winding 71 is transferred to a voltage at the first third-transformer secondary winding 72 coupled to the first third-transformer cell supply terminal 721 generating a first split path of the first auxiliary power path. Via the first split path of the first auxiliary power path a fourth auxiliary AC supply voltage 722 may be provided at the first third-transformer cell supply terminal 721.

Furthermore, the third transformer 701 may enable that the voltage input at the third transformer primary winding 71 is transferred to a voltage at the second third-transformer secondary winding 73 coupled to the second third-transformer cell supply terminal 731 generating a second split path of the first auxiliary power path. Via the second split path of the first auxiliary power path a fifth auxiliary AC supply voltage 732 may be provided at the second third-transformer cell supply terminal 731.

The fourth auxiliary AC supply voltage 722 and fifth auxiliary AC supply voltage 732 may be coupled to a rectifier circuitry to provide power to the MV unit 20, as described herein. The rectifier circuitry coupled to the third transformer cell, may be further coupled to respective DC/DC cells as explained herein to provide power to the MV unit 20.

The splitting of the first auxiliary power path may enable a further decoupling which may be beneficial as the auxiliary power provided via the third transformer cell is based on two transformer actions. Furthermore, the splitting of the first auxiliary power path may enable that different voltage levels may be generated at the first and second third-transformer supply terminals 721, 731 in view of the winding configuration of the third transformer 701.

The first and second auxiliary AC supply voltages 622, 632 may be different from each other based on the winding configuration of the third transformer 701 (e.g., the turn ratios of the first and second third-transformer secondary windings 72, 73 may be different with respect to the third transformer primary winding 71 of the second transformer 603).

Different voltage AC voltage levels at the first and second third-transformer supply terminals 721, 731 may be beneficial as different components of the MV unit 20 may require different DC voltage levels. For example, when different AC voltage levels are provided only a rectification thereof by a rectifier circuitry may be provided to enable powering the MV unit 20. In other examples, when different AC voltage levels are provided the technical requirements for DC-DC conversation after the rectifier circuitry may be reduced at least in part (e.g., a smaller DC-DC voltage difference may be need to be performed by a DC/DC converter).

The third transformer cell 70 may further comprise a second resonant tank circuitry. For example, the third transformer cell 70 may comprise an LC-circuit configuration (in the same manner as described herein for the first resonant tank circuitry). In the example, of FIG. 4, the transformer cell 70 may comprise a third-transformer cell inductor 700 at the primary side of the third transformer 701 being part of the second resonant tank circuitry. The transformer cell 70 may further comprise a first capacitor 740 coupled between the first third-transformer secondary winding 72 and the first third transformer cell supply terminal 721. The transformer cell 70 may further comprise a second capacitor 750 coupled between the second third-transformer secondary winding 73 and the second third transformer cell supply terminal 731. The first capacitor 740 and the second capacitor 750 may be part of the second resonant tank circuitry. As described herein for the multi-winding transformer of FIG. 4, different resonance frequency for the according auxiliary power paths may be configured via the second resonant tank circuitry. A first unit of the second resonant tank circuitry may comprise the third transformer cell inductor 700 and the first capacitor 740. Via the first unit of the second resonant tank circuitry a resonant frequency for the first split path may be adapted. A second unit of the second resonant tank circuitry may comprise the third transformer cell inductor 700 and the second capacitor 750. Via the second unit of the second resonant tank circuitry a resonant frequency for the first split path may be adapted.

Notably, a respective resonance frequency of an auxiliary power path from the MV AC voltage 211 via the second and third transformer cells 60, 70 to a component of the MV unit may depend on the first and second resonant tank circuitry as both LC-configurations of the first and second resonant tank circuitry may contribute to the respective resonance frequency.

In an example, the shown third-transformer cell inductor 700 may be a leakage inductance of the third transformer 701. In other examples, the third-transformer cell inductor 700 may be a separate inductor coupled between the first terminal of the second transformer cell 60 and the input terminal 711 of the third transformer 701.

In other examples, a further separate resonant tank circuitry may be coupled between the first supply terminal 621 and the input terminal 711 of the third transformer 701. The further separate resonant tank circuitry may also comprise an LC configuration and may further be used to adapt the resonance frequency of the respective power path. In some examples, if the further separate resonant tank circuitry is used, the second resonant tank circuitry may not necessarily be integrated into the converter. For example, the functionality of the second resonant tank circuitry may be at least in part provided by the further resonant tank circuitry.

The herein described aspects of the embodiments may be combined. For example, the third transformer 701 may comprise more than two third-transformer secondary windings. Furthermore, a fourth transformer cell may be provided coupled to the second supply terminal 631 in the same manner as described for the third transformer cell 70 being coupled to the first supply terminal 621.

## Claims

1. A converter (100) for transferring power from a medium voltage, MV, side to a low voltage, LV, side, comprising:
a MV unit (20) at the MV side comprising a DC/AC cell (210) having a MV AC terminal (212), the DC/AC cell configured for generating an MV AC voltage (211) at the MV AC terminal (212) from a MV DC voltage;
a LV unit (30) at the LV side comprising an AC/DC cell (310) having a LV AC terminal (312), the AC/DC cell configured for generating a LV DC voltage from a LV AC voltage (311) at the LV AC terminal;
a first transformer cell (40) comprising a first transformer (401), the first transformer cell being electrically connected to the MV AC terminal (212) and the LV AC terminal (312), the first transformer cell configured to generate the LV AC voltage (311) at the LV AC terminal from the MV AC voltage (211) at the MV AC terminal;
a second transformer cell (60) comprising a first resonant tank circuitry and a second transformer (603), the second transformer cell being electrically connected to the MV AC terminal (212), the second transformer cell configured to generate an auxiliary AC supply voltage (611) at one or more supply terminals (612, 621, 631) of the second transformer cell from the MV AC voltage (211) at the MV AC terminal (212),
an auxiliary power circuitry (90) coupled to the one or more supply terminals (612, 621, 631) of the second transformer cell (60), the auxiliary power circuitry configured to provide auxiliary power (91) to one or more components of the MV unit based at least in part on the auxiliary AC supply voltage (611) at the one or more supply terminals (612).

2. The converter according to claim 1, wherein the second transformer cell (60) is connected in parallel to the first transformer cell (40), particularly wherein the second transformer (603) of the second transformer cell is connected in parallel to the first transformer (401) of the first transformer cell.

3. The converter according to claim 1 or 2, wherein the auxiliary power circuitry (90) comprises a rectifier circuitry (613, 623, 633) coupled to the one or more supply terminals (621, 631, 612) of the second transformer (60), the rectifier circuitry configured to generate an auxiliary DC supply voltage (Vₐᵤₓ) based at least in part on the auxiliary AC supply voltage to provide DC power to the one or more components.

4. The converter according to claim 3, the auxiliary power circuitry (90) comprising:
one or more DC-DC converters (81, 82, 83) [preferably one or more HF DC-DC converters] coupled to the rectifier circuitry (613), the one or more DC-DC converters configured to generate one or more auxiliary DC voltages for providing auxiliary DC power to one or more components of the MV unit (20).

5. The converter according to any of claims 1-4, wherein the first resonant tank circuitry of the second transformer cell comprises at least one of the following:
a leakage inductance of the second transformer, a separate inductance electrically coupled to the second transformer, a separate capacitor electrically coupled to the second transformer, a separate LC-circuit configuration electrically coupled to the second transformer.

6. The converter according to any of claims 1-5, wherein the second transformer (603) of the second transformer cell (60) is a multi-winding transformer comprising:
a primary winding (61) having a primary winding terminal being electrically coupled to the MV AC terminal (212);
a first secondary winding (62) electrically coupled to a first supply terminal (621) of the second transformer cell, the second transformer cell (60) configured to generate a first auxiliary AC supply voltage (622) at the first supply terminal (621) from the MV AC voltage (211) at the MV AC terminal (212);
a second secondary winding (63) electrically coupled to a second supply terminal (631) of the second transformer cell, the second transformer (60) configured to generate a second auxiliary AC supply voltage (632) at the second supply terminal (631) from the MV AC voltage (211) at the MV AC terminal (212);
the auxiliary power circuitry (90) being configured to provide power to the one or more components of the MV unit based at least in part on the first auxiliary AC supply voltage (622) and the second auxiliary AC supply voltage (632).

7. The converter according to claim 6, wherein the second transformer of the second transformer cell (60) comprises three or more secondary windings, each of the three or more secondary windings electrically coupled to a respective supply terminal of the second transformer for generating a respective auxiliary AC supply voltage;
the auxiliary power circuitry (90) being configured to provide power to the one or more components of the MV unit (20) based at least in part on the respective auxiliary AC supply voltages at the respective supply terminals.

8. The converter according to any of claims 1-7, further comprising a third transformer cell (70) comprising a second resonant tank circuitry and a third transformer (701), the third transformer cell electrically connected to a supply terminal (621) of the one or more supply terminals of the second transformer cell (60), the third transformer cell (70) configured to generate a third transformer auxiliary AC supply voltage (722) at one or more third transformer cell supply terminals (721, 731) of the third transformer cell (70) from the auxiliary AC supply voltage (621) at the supply terminal (621) of the one or more supply terminals of the second transformer cell (60);
the auxiliary power circuitry (90) being configured to provide power to the one or more components of the MV unit (20) based at least in part on the third transformer auxiliary AC supply voltage (722).

9. The converter according to claims 6 or 7, further comprising a third transformer cell (70) comprising a second resonant tank circuitry and a third transformer (701), the third transformer cell electrically connected to a supply terminal (621) of the one or more supply terminals of the second transformer cell (60), wherein the third transformer is a multi-winding transformer comprising:
a third-transformer primary winding (71) having a third-transformer primary winding terminal (711) electrically coupled to the first supply terminal (621) of the second transformer cell (60);
a third-transformer first-secondary winding (72) having a third-transformer first-secondary winding terminal electrically coupled to a first third-transformer-cell supply terminal (721), the third transformer cell configured to generate a fourth auxiliary AC supply voltage (722) at the first third-transformer supply terminal (721) from the first auxiliary AC voltage (642) at the first supply terminal (621) of the second transformer cell (60);
a third-transformer second-secondary winding (73) having a third-transformer second-secondary winding terminal coupled to a second third transformer supply terminal (731), the third transformer cell configured to generate a fifth auxiliary AC supply voltage (732) at the second third-transformer supply terminal (731) from the first auxiliary AC voltage (642) at the first supply terminal (621) of the second transformer cell (60);
the auxiliary power circuitry (90) being configured to provide power to the one or more components of the MV unit (20) based at least in part on the fourth auxiliary AC supply voltage and the fifth auxiliary AC supply voltage.

10. The converter according to any of claims 1-9, wherein the second transformer cell is configured to provide an auxiliary resonant frequency such that at a predetermined load, particularly a maximum rated load, a voltage gain provided by the second transformer cell deviates from a unity voltage gain by no more than 20%, preferably 10 %, more preferably 5 %, more preferably 2 %.

11. The converter according to any of claims 1-10, the LV unit further comprising:
a control circuitry coupled to the at least one AC/DC cell (310) of the LV unit (30), the control circuitry configured to apply a start-up voltage at the LV AC terminal (312) of the AC/DC cell (310);
the first transformer cell (40) being further configured to generate a transformed start-up voltage at the MV AC terminal (212) from the start-up voltage at the LV AC terminal (312);
the second transformer cell (60) being further configured to generate the auxiliary AC supply voltage (611) at a supply terminal (612, 621, 631) of the one or more supply terminals of the second transformer cell from the transformed start-up voltage at the MV AC terminal.

12. The converter according to any of claims 1-11,
the first transformer cell (40) configured to withstand a first basic insulation level to galvanically insulate the MV side from the LV side of the converter;
the second transformer cell (60) configured for lesser insulation than the first transformer cell (40).

13. The converter according to any of claims 1-12,
with the at least one DC/AC cell (210) being configured to generate an MV AC voltage from a MV DC voltage, wherein an absolute value of the MV DC voltage is in the range of 1 kV to 52 kV;
wherein the second transformer cell (60) and the auxiliary power circuitry (90) are configured to provide as auxiliary DC power an auxiliary DC voltage to the one or more components having an absolute value in the range of 6 V to 200 V.

14. Method for operating a converter for transferring power from a medium voltage, MV, side to a low voltage, LV, side, comprising:
by a DC/AC cell (210) of a MV unit (20) at the MV side:
generating an MV AC voltage from a MV DC voltage at a MV AC terminal (212) of the DC/AC cell;
by at least one AC/DC cell (310) of a LV unit (30) at the LV side:
generating a DC voltage from a LV AC voltage (311) at a LV AC terminal (312) of the AC/DC cell;
by a first transformer cell (40), comprising a first transformer, the first transformer cell being electrically connected to the MV AC terminal (212) and the LV AC terminal (312):
generating the LV AC voltage at the LV AC terminal (312) from the MV AC voltage at the MV AC terminal (212);
by a second transformer cell (60) comprising a first resonant tank circuitry and a second transformer, the second transformer cell being electrically connected to the MV AC terminal (212):
generating an auxiliary supply voltage (611) at one or more supply terminals (612) of the second transformer cell from the MV AC voltage at the MV AC terminal (212);
by an auxiliary power circuitry (90):
providing power to one or more components of the MV unit (20) based at least in part on the auxiliary supply voltage (611) at the one or more supply terminals (612).

15. Method according to claim 14, further comprising:
by a control circuitry coupled to the AC/DC cell (310) of the LV unit (30):
applying a start-up voltage at the LV AC terminal (212) of the AC/DC cell;
by the first transformer cell (40):
generating a transformed start-up voltage at the MV AC terminal (212) from the start-up voltage at the LV AC terminal (212);
by the second transformer cell (60):
generating the auxiliary AC supply voltage at one or more supply terminals (612) of the second transformer from the transformed voltage signal at the MV AC terminal (212).
